# EUROPÄISCHE PATENTANMELDUNG

(11) **EP 1 302 384 A2**
(43) Veröffentlichungstag der Anmeldung: **16.04.2003**
(21) Anmeldenummer: 02022973.8
(22) Anmeldetag: 14.10.2002
(51) Int. Cl.: B62D 1/04

(54) **Verfahren zum Herstellen eines Fahrzeuglenkrads**

(30) Priorität: 15.10.2001 DE 10150804
(71) Anmelder: TRW Automotive Safety Systems GmbH, 63743 Aschaffenburg (DE)
(72) Erfinder: Lorenz, Christian, 63849 Leidersbach (DE); Bieber, Udo, 63843 Niedernberg (DE); Kreuzer, Martin, 63839 Kleinwallstadt (DE)
(74) Vertreter: Kitzhofer, Thomas, Dipl.-Ing.

(57) **Zusammenfassung**

Die Erfindung betrifft ein Verfahren zum Herstellen eines Fahrzeugslenkrads mit den folgenden Schritten: Eine Schäumform (10) mit einem Ober- und einem Unterteil (12, 14) wird verwendet. In das nicht durch das Oberteil (14) verschlossene Unterteil (12) werden zwei verschiedene Schaumstoffkomponenten (A, B) eingespritzt, nämlich eine zentrale Trägerkomponente (A) sowie eine diese umgebende, weiche Komponente (B). Die Schäumform (10) wird durch Verschließen des Unterteils (12) mittels des Oberteils (14) verschlossen und die Schäumform (10) wird beheizt.

## Beschreibung

Die Erfindung betrifft ein Verfahren zum Herstellen eines Fahrzeuglenkrads.

Fahrzeuglenkräder sind häufig so aufgebaut, daß ein metallisches Skelett, das einen Grundkörper für Lenkradkranz, Speichen und Nabe bildet, von einer oder mehreren geschäumten oder gespritzten Kunststoffschichten umgeben ist. Das Skelett sorgt dabei für die notwendige Stabilität des Lenkrads, während die Kunststoffschichten Optik und Haptik des fertigen Lenkrads bestimmen. Sowohl zur Reduzierung des Gewichts als auch zur Vereinfachung des Herstellungsprozesses und damit zur Kostenverringerung wird versucht, das Skelett soweit wie möglich ebenfalls durch Kunststoffkomponenten zu ersetzen. In der DE 299 01 404 U1 ist z.B. ein Lenkrad beschrieben, dessen Lenkradkranz vollständig aus einem faserverstärkten Kunststoff gebildet ist. Während bei diesem Lenkrad eine deutliche Gewichtsreduzierung bei gleichzeitig hervorragender Stabilität erreicht wird, besteht dennoch ein Problem darin, daß der Lenkradkranz nachträglich bearbeitet werden muß, um sicherzustellen, daß keine Verstärkungsfasern über dessen Oberfläche hervorstehen, was den Griffkomfort nachteilig beeinflussen würde.

Die vorliegende Erfindung schlägt ein Verfahren zur Herstellung eines Fahrzeuglenkrads vor, bei dem unter Beibehalt des Vorteils des Verwendens einer stabilen Trägerkomponente die Herstellungskosten gegenüber dem bekannten Verfahren gesenkt werden können.

Dies wird dadurch erreicht, daß zur Herstellung eines Fahrzeuglenkrads eine Schäumform mit einem Ober- und einem Unterteil verwendet wird, wobei in das nicht durch das Oberteil verschlossene Unterteil zwei verschiedene Schaumstoffkomponenten eingespritzt werden, nämlich eine zentrale Trägerkomponente sowie eine diese umgebende, weiche Komponente, die Schäumform durch Verschließen des Unterteils mittels des Oberteils verschlossen und die Schäumform beheizt wird. Auf diese Weise können in einem Herstellungsschritt sowohl die tragende Komponente des Lenkrades als auch eine diese umgebende, einen hohen Griffkomfort bietende Komponente hergestellt werden. Das Einbringen der verschiedenen Komponenten ist durch die offene Schäumform erleichtert. Das Aufschäumen, bei dem die Kunststoffschichten des Lenkrads ihre endgültige Form annehmen, erfolgt erst nach Verschließen der Form durch die zugefügte Wärme. Indem die zentrale Trägerkomponente von der weichen Komponente umgeben ist, entfällt die Nachbearbeitung der Oberfläche der Trägerkomponente. Zudem wird die üblicherweise harte Trägerkomponente durch eine haptisch angenehmere weiche Komponente abgedeckt.

Vorzugsweise ist die zentrale Trägerkomponente allseitig von der weichen Komponente umgeben, um einen hohen Griffkomfort an jeder Stelle des Lenkrades zu gewährleisten.

Die zentrale Trägerkomponente kann ein Hartschaum oder ein faserverstärkter Schaum sein, wobei bekannte Materialien wie z.B. glasfaser- oder kevlarverstärkte Schaumstoffe zum Einsatz kommen können, wie sie in der DE 299 01 404 U1 beschrieben sind.

Vorteilhaft wird zumindest der Lenkradkranz ausschließlich aus der Trägerkomponente und der weichen Komponente zu bilden. Es ist möglich, auch die Speichen auf diese Weise herzustellen. Das Lenkradskelett kann so auf ein Minimum reduziert werden.

In einer bevorzugten Ausführungsform der Erfindung wird eine Düse zum Einbringen der Komponenten in das Unterteil verwendet, die einen zentralen Auslaß für die Trägerkomponente und einen den zentralen Auslaß umgebenden Ringauslaß für die weiche Komponente hat. Bei Verwendung einer derartigen Düse werden beide Komponenten in ihrer gewünschten Anordnung gleichzeitig in die Schäumform eingebracht, so daß die Herstellungszeit minimal gehalten werden kann.

Alternativ kann in das Unterteil zuerst eine Bodenschicht aus weichem Komponentenmaterial eingebracht werden, anschließend in einem mittleren Abschnitt der Bodenkomponente die Trägerkomponente aufgebracht werden und schließlich auf diese erneut das weiche Komponentenmaterial aufgebracht werden, so daß die Trägerkomponente von der weichen Komponente umgeben ist. Auch in diesem Fall ist nach Abschluß des Herstellungsverfahrens die Trägerkomponente vollständig von der weichen Komponente umgeben. Die Düse zum Einbringen der Komponenten benötigt in diesem Fall keine aufwendige Gestaltung.

Bei dieser Form des Verfahrens kann die gleiche Düse zum Einbringen der Trägerkomponente wie zum Einbringen der weichen Komponente vorgesehen sein, oder es können zwei verschiedene Düsen verwendet werden.

Die Führung der Düse erfolgt vorzugsweise durch einen Roboter. Unter anderem wird hierdurch erleichtert, das Verfahren an verschiedene Lenkradgeometrien anzupassen.

Weitere Merkmale und Vorteile der Erfindung gehen aus der nachfolgenden Beschreibung zweier Ausführungsbeispiele hervor, die anhand der beigefügten Zeichnungen näher erläutert sind. In den Zeichnungen zeigen:
- Figur 1 eine schematische Draufsicht auf ein Unterteil einer Schäumform zur Durchführung des erfindungsgemäßen Verfahrens;
- Figur 2a einen Schnitt entlang der Linie A-A aus Figur 1 durch die Schäumform mit einem Rohling gemäß einer ersten Ausführung des erfindungsgemäßen Verfahrens;
- Figur 2b eine Düse zur Durchführung des in Figur 2a illustrierten Verfahrens;
- Figur 3 a einen Schnitt entlang des Linie A-A aus Figur 1 durch die Schäumform mit einem Rohling gemäß einer zweiten Ausführung des erfindungsgemäßen Verfahrens;
- Figur 3b eine Düse zur Durchführung des in Figur 3a illustrierten Verfahrens; und
- Figur 4 schematisch ein Lenkrad.

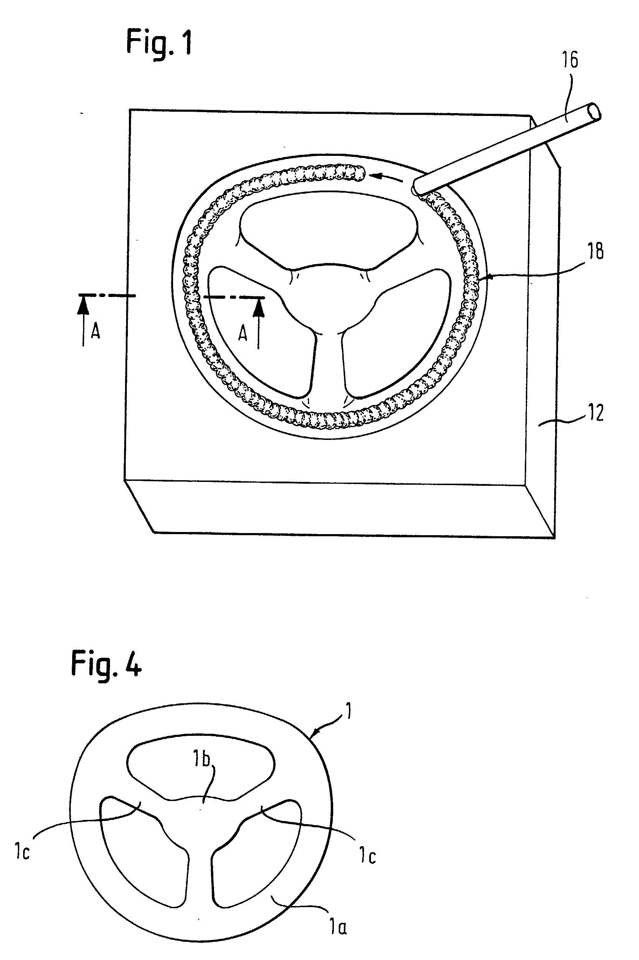

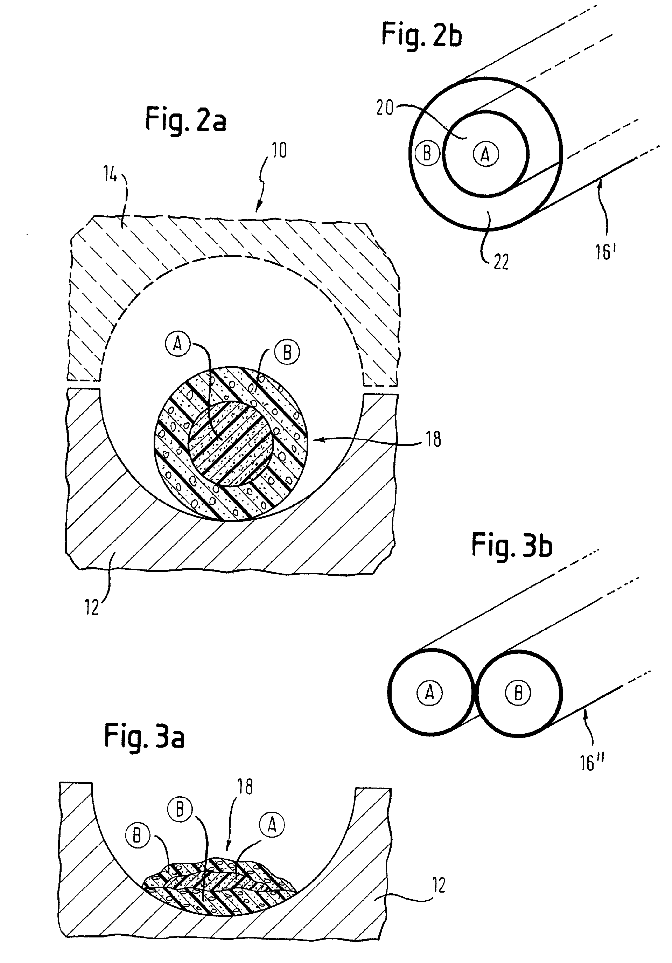

Das erfindungsgemäße Verfahren zur Herstellung eines Fahrzeuglenkrads 1, mit einem Lenkradkranz 1a, einer Nabe 1b und Speichen 1c, verwendet eine zweiteilige Schäumform 10, deren Unterteil 12 in Figur 1 näher gezeigt ist. Das dazugehörige Oberteil 14 ist schematisch in Figur 2a dargestellt. Die Schäumform 10 bildet eine Negativform eines Lenkrades mit Abschnitten für den Lenkradkranz, die Nabe und Nabe und Lenkradkranz verbindende Speichen.

In das Unterteil 12 wird eine aus zwei Schaumstoffkomponenten A, B bestehende Raupe 18 mittels einer von einem nicht dargestellten Roboter geführten Düse 16 eingebracht. Wenn nur der Lenkradkranz aus dem geschäumten Werkstoff bestehen soll, wird die Raupe 18 als geschlossener Ring in den Lenkradkranzabschnitt der Schäumform gelegt. Ein Metallskelett würde dann in die Ausnehmung für die Speichen und die Nabe eingelegt und durch eine weiche Schaumstoffkomponente B umschäumt werden. Soll jedoch auch die Speiche und zumindest ein Teil der Nabe aus dem geschäumten Material bestehen, wird die Raupe 18 auch in die Ausnehmung in der Schäumform 10 gelegt, die den Speichenabschnitt und gegebenenfalls auch den Nabenabschnitt bildet. Das Unterteil 12 ist beim Einbringen der Raupe 18 noch nicht durch das Oberteil 14 verschlossen. Nach dem Befüllen wird die Raupe 18 in der Schäumform 10 eingeschlossen, indem die Schäumform 10 mit dem Oberteil 14 verschlossen wird (Figur 2a). Anschließend wird die Raupe 18 durch Beheizen der Schäumform 10 erhitzt. In diesem Schritt dehnen sich die Komponenten A, B aus und füllen das Innere der Schäumform 10 aus, so daß das Lenkrad seine endgültige Gestalt erhält. Nach dem Aushärten der Schaumstoffkomponenten A, B wird die Schäumform 10 geöffnet und das Lenkrad entnommen.

Bevorzugt ist die Komponente A ein Hartschaum oder ein faserverstärkter Schaum, der z.B. gleichmäßig im Schaum verteilte Glasfasern oder Kevlarfasern enthält. Nach dem Aushärten bildet die Komponente A, die sogenannte Trägerkomponente, den Kern des Lenkrads und ersetzt ein herkömmliches Metallskelett teilweise oder vollständig. Die Komponente B hingegen besteht bevorzugt aus einem weichen Schaumstoff. Diese im weiteren auch als weiche Komponente B bezeichnete Schicht bestimmt die Haptik des Lenkrads. Hier kommen bevorzugt Materialien zum Einsatz, die gewöhnlich zum Umschäumen von Lenkrädern eingesetzt werden und die keine weitere Nachbearbeitung erfordern. Selbstverständlich kann das Lenkrad nach dem Schäumprozeß aber auch einer weiteren herkömmlichen Veredelung der Oberfläche unterzogen werden. Ebenso ist das Verfahren nicht auf die Verwendung von nur zwei Schaumstoffkomponenten beschränkt. Wird ein Skelett verwendet, z.B. zur Gestaltung der Nabe 1b, wird dieses bevorzugt vor oder während des Einfüllens der Schaumstoffkomponenten A, B in das Unterteil 12 eingebracht, so daß das Skelett beim Aufschäumen in die entstehenden Schaumstoffschichten eingebettet wird.

In einer ersten Ausführung des erfindungsgemäßen Verfahrens werden beide Komponenten A, B gleichzeitig in das Unterteil 12 eingebracht. Dazu wird eine Düse 16' verwendet (Fign. 2a, 2b), die einen zentralen Auslaß 20 für die Komponente A und einen den zentralen Auslaß 20 umgebenden Ringauslaß 22 für die Komponente B aufweist. Im Schaumstoffrohling 18 ist die Komponente A vollständig von der Komponente B umgeben.

In den Figuren 3a und 3b ist eine zweite Variante des erfindungsgemäßen Verfahrens dargestellt. In diesem Fall werden die beiden Komponenten A, B schichtweise nacheinander in das Unterteil 12 eingebracht. Zu diesem Zweck kann, wie in Figur 3b dargestellt, eine Düse 16" verwendet werden, bei der die beiden Komponenten A, B nebeneinander herangeführt werden, es kann aber auch eine einfache Düse 16, wie in Figur 1 gezeigt, eingesetzt werden, bei der alle Komponenten durch die gleiche Düse fließen.

Zunächst wird eine Schicht aus der weichen Komponente B auf den Boden des Unterteils 12 aufgetragen. In einem nächsten Schritt wird eine aus der Komponente A bestehende Schicht so auf die bereits in der Schäumform befindliche Schicht aus Komponente B aufgebracht, daß diese Schicht an den Rändern nicht vollständig bedeckt ist. Zuletzt wird wieder eine Schicht der Komponente B aufgebracht, die so in das Unterteil 12 eingefüllt wird, daß die Komponente A allseits von der weichen Komponente B umschlossen ist. Anschließend wird, wie oben beschrieben, ein Oberteil 14 auf das Unterteil 12 aufgesetzt und die Schäumform 10 beheizt.

In jedem Fall werden sämtliche Schaumstoffkomponenten des Lenkrads in die Schäumform 10 eingebracht, bevor diese verschlossen wird und der eigentliche Schäumprozeß stattfindet.

## Patentansprüche

1. Verfahren zum Herstellen eines Fahrzeuglenkrads, **gekennzeichnet durch** folgende Schritte:
- eine Schäumform (10) mit einem Ober- und einem Unterteil (14, 12) wird verwendet,
- in das nicht **durch** das Oberteil (14) verschlossene Unterteil (12) werden zwei verschiedene Schaumstoffkomponenten (A, B) eingespritzt, nämlich eine zentrale Trägerkomponente (A) sowie eine diese umgebende, weiche Komponente (B),
- die Schäumform (10) wird **durch** Verschließen des Unterteils (12) mittels des Oberteils (14) verschlossen und
- die Schäumform (10) wird beheizt.

2. Verfahren nach Anspruch 1, **dadurch gekennzeichnet, daß** die zentrale Trägerkomponente (A) allseitig von der weichen Komponente (B) umgeben ist.

3. Verfahren nach Anspruch 1 oder 2, **dadurch gekennzeichnet, daß** die zentrale Trägerkomponente (A) ein Hartschaum oder ein faserverstärkter Schaum ist.

4. Verfahren nach einem der vorhergehenden Ansprüche, **dadurch gekennzeichnet, daß** wenigstens der Lenkradkranz (1a) ausschließlich durch die Trägerkomponente (A) um die weiche Komponente (B) gebildet ist.

5. Verfahren nach einem der vorhergehenden Ansprüche, **dadurch gekennzeichnet, daß** eine Düse (16; 16'; 16") zum Einbringen der Komponenten (A, B) in das Unterteil (12) verwendet wird, die einen zentralen Auslaß (20) für die Trägerkomponente (A) und einen den zentralen Auslaß (20) umgebenden Ringauslaß (22) für die weiche Komponente (B) hat.

6. Verfahren nach einem der Ansprüche 1 bis 4, **dadurch gekennzeichnet, daß** in das Unterteil (12) zuerst eine Bodenschicht aus weichem Komponentenmaterial (B) eingebracht wird,
anschließend in einen mittleren Abschnitt der Bodenschicht die Trägerkomponente (A) aufgebracht wird und schließlich
auf diese erneut das weiche Komponentenmaterial (B) aufgebracht wird, so daß die Trägerkomponente (A) von der weichen Komponente (B) umgeben ist.
